# EUROPEAN PATENT SPECIFICATION

(11) **EP 2 900 446 B1**
(45) Date of publication and mention of the grant of the patent: **06.01.2021**
(21) Application number: 13770763.4
(22) Date of filing: 17.09.2013
(51) Int. Cl.: B29C 44/44, B29C 44/12, B29K 105/00, B29K 105/24

(54) **FOAM CORE COMPOSITES**
VERBUNDSTOFFE MIT SCHAUMKERN
COMPOSITES À COEUR DE MOUSSE

(30) Priority: 25.09.2012 US 201261705432 P
(43) Date of publication of application: 05.08.2015
(73) Proprietor: Zephyros, Inc., Romeo, MI 48065 (US)
(72) Inventor: WALKER, Jason, Lenox, MI 48048 (US)
(74) Representative: Kutzenberger Wolff & Partner
(86) International application number: PCT/US2013/060111
(87) International publication number: WO 2014/052094

(56) References cited:
- EP-A1- 2 251 231
- DE-A1- 3 740 678
- US-A1- 2009 324 932
- US-A1- 2011 193 254
- US-A1- 2012 039 665

## Description

### FIELD OF THE INVENTION

The present teachings relate generally to foam core composite structures for forming high-strength lightweight devices. More specifically, the present teachings relate to composite structures including a foam core and associated panel materials.

### BACKGROUND OF THE INVENTION

The manufacture of foam composite panel structures is traditionally achieved by adhering panels to a rigid cured foam using heated high-powered compression presses. Relevant state in the art is for example US 2011/193254, DE 3740678 A1, US 2009/324932 A1, EP 2 251 231 A1 and US 2012/039665. Based upon the rigid and pre-cured nature of the foam, it is typically difficult to modify the shape of the foam to form contoured/non-planar panel surfaces without the use of costly high-power, high heat press machinery. Further, any modification of panel size or shape must be performed in a separate step after the press processing. Thus, the existing manufacture process requires high-power press machinery and also a secondary step for any modification to the shape or size of the foam composite structure. Since most applications for these high-strength, low weight composite structures require a certain shape or contour, a multi-step process is nearly always required.

It would therefore be desirable to provide a foam material that is flexible in nature so that it can be shaped and cured simultaneously such that high-power presses and high heat are unnecessary. By shaping a foam material in a pre-cure state, the need for high-strength presses is eliminated as is the need for post formation shaping and sizing steps.

### SUMMARY OF THE INVENTION

The present teachings meet some or all of the above needs by providing a method comprising locating into a mold a solid activatable material, the activatable material being amenable to plastic deformation and pliable enough to take on the general contours and shape of the mold prior to activation of the activatable material. The method further includes simultaneously activating and shaping the material into a foam core (e.g., a first foam core) defined by the mold wherein the activatable material conforms to the shape of the mold due to the force of expansion of the activatable material during the activation. The shaping step is further substantially free of any compressive force.

The method may further include bonding at least one face sheet to the foam core wherein the bonding occurs substantially simultaneously with the activating and shaping step. An adhesive layer may be located onto one or more of a first surface or opposing second surface of the foam core. A second foam core may be formed and may be located in direct or indirect planar contact with the first foam core. A third foam core may be formed and located in direct or indirect planar contact with one or more of the first foam core and second foam core. One or more face sheets may be bonded in between the foam core and second foam core. At least two face sheets may be bonded to the first foam core. At least two face sheets may be bonded to one or more of the first foam core and second foam core.

The at least one face sheet may be formed from a material selected from fibrous materials, metallic materials, polymeric materials, or combinations thereof. The at least one face sheet may be formed from a honeycomb material, a pre-preg material, or combinations thereof. The at least one face sheet may be formed from aluminum, steel, or combinations thereof. The at least one face sheet may be formed from a woven fiber, a non-woven fiber, a lapped fiber, or combinations thereof. The at least one face sheet may be formed from a carbon fiber material, a metallic woven material, or combinations thereof.

The activation of the activatable material may occur by way of a heat cure, moisture cure, room temperature cure, induction cure, ultra-violet cure, or any combination thereof. The method may result in formation of a composite structure having a non-planar geometry. After activation the activatable material may not be amenable to plastic deformation. Prior to activation the activatable material may be a flexible solid and after activation the activatable material may be an inflexible solid.

The teachings herein further provide for a method comprising locating into a mold a solid activatable material, the activatable material being amenable to plastic deformation and pliable enough to take on the general contours and shape of the mold prior to activation of the activatable material. The method may further include simultaneously activating and shaping the material into a foam core defined by the mold wherein the activatable material conforms to the shape of the mold due to the force of expansion of the activatable material during the activation. The method may also include bonding at least one face sheet to the foam core. The shaping step may be substantially free of any compressive force and a resulting composite structure may have a substantially non-planar geometry. The bonding may also occur substantially simultaneously with the activating and shaping step.

The foam core composite structures described herein provide improved physical properties over existing structures and materials and simplify the manufacturing process by providing for simultaneous activation, shaping and bonding. The methods disclosed herein may also allow for simplified customization of the size and shape of the foam core composite structures by avoiding the challenges of attempting to shape the rigid pre-cured foam panels traditionally used.

### DETAILED DESCRIPTION

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims, along with the full scope of equivalents to which such claims are entitled.

In general, the teachings herein provide a method for the formation of shaped foam core composite structures and the foam core structures formed by said method. The method includes simultaneously activating and shaping a solid activatable material into a foam core (e.g., a first foam core). The method may include locating the solid activatable material into a mold, the activatable material being amenable to plastic deformation (e.g., flexible) and pliable enough to take on the general contours and shape of the mold prior to activation of the activatable material. The shaping of the material into a foam core may be defined by the mold wherein the activatable material conforms to the shape of the mold due to the force of expansion of the activatable material during the activation. Traditionally, the formation of foam core panels requires substantial compressive force for forming and shaping the panel, however, the methods taught herein provide for formation and shaping that is substantially free of any compressive force.

The material for forming the foam core is preferably a solid material that is flexible in its green state (e.g., prior to activation). By flexible, it is understood that the material is amenable to plastic deformation and relatively pliable. Further, the material is sufficiently flexible such that it may be stored in a roll form. The flexibility of the material is also such that the material does not exhibit a substantial elastic memory. In other words, if the material is bent or shaped by an applied force, the material cannot return to its original shape by simply removing the applied force. The flexible nature of the foam is no longer present post-activation, where the foam is cured to form an inflexible solid material. Activation generally occurs substantially simultaneously with shape formation of the foam so that no separate shaping step is required post activation.

During the formation of the foam core, one or more face sheets (e.g., panels) may be adhered to one or more surfaces of the foam core. This process may occur substantially simultaneously with the activation and shaping of the foam core, such that the manufacture of the resulting foam core composites requires a single manufacturing step. It is also envisioned however, that attachment of one or more face sheets may occur as a separate step. Generally, a foam core in accordance with the present teachings will have a first surface and an opposing second surface. A face sheet may be thus be bonded to one or more of those surfaces. Each face sheet may comprise the same materials or alternatively, each face sheet may comprise different materials. Each foam core may comprise the same materials, or each foam core may comprise different materials. It also possible that certain portions of face sheets or foam cores may comprise a first material, whereas portions of those same face sheets or foam cores may comprise a second material that is different from the first material. Thus, the vertical arrangement of a composite structure may include a plurality of differing materials, and the horizontal arrangement of the composite structure may also include a plurality of differing materials.

It is also possible that the composite structures may be formed of multiple layers of foam cores and face sheets. The foam cores and face sheets may be arranged so that the foam cores and face sheets alternate. As such, each foam core may lie in direct planar contact with one or two face sheets and each face sheet may lie in direct planar contact with one or two foam cores. It may also be possible that two or more foam core layers may be arranged adjacent one another such that a first foam core layer lies in direct planar contact with a second foam core layer. This may also be true for the face sheets such that a first face sheet may lie in direct planar contact with a second face sheet. As part of the bonding process a material for providing bonding between one or more layers may also be utilized. The bonding may be an adhesive bond, a chemical bond, or a mechanical bond. As such, it is understood that those layers lying in direct planar contact with one another may include a bonding layer therebetween. It is also possible that the foam core material may include adhesive properties and as such, may adhere to any contacted face sheet upon activation of the activatable material.

The materials for forming both the foam cores and face sheets may be selected to have specific values for density, elastic modulus, volumetric expansion and/or certain mechanical properties. The foam core materials may have a density pre-activation that is at least about 0.1 g/cc, and less than about 3 g/cc. The foam core materials may have a density pre-activation that is at least about 0.8 g/cc, and less than about 1.8 g/cc. The foam core materials may have a volumetric expansion post-activation that is at least about 50%, and less than about 3000%. The resulting composite structures may have a gradient across the structure of one or more of these values. For example, the structure may have differing densities along different portions of the structure. The densities may vary pre-cure if more than one activatable composition material is present in the foam core. The densities may vary post-cure for this same reason, or may vary in the event of restricted expansion. If certain portions of the foam core expand further and other portions are limited in their directional expansion, the limited portions will have increased density as compared to the non-limited portions.

The face sheets may be formed of a variety of materials including fibrous materials, metallic materials, and polymeric materials. The fibrous materials may be woven fibrous materials or non-woven fibrous materials. The fibrous materials may comprise vertically lapped fibers. The face sheets may include a combination of varying types of fibrous materials. The metallic materials may include but are not limited to Aluminum, steel, woven metal strands, a metallic scrim material, or combinations thereof. In the event that the one or more face sheets comprises a polymeric material, the polymeric material may be a thermoplastic or thermoset polymer. The polymer may comprise a woven material, a non-woven material, or a monolithic material. The face sheet may include a polymeric film. The face sheet may include a carbon fiber material. The face sheet may include a honeycomb structure or pre-preg material. The face sheets may be decorative in nature and/or may provide a functional benefit such as a heat shield or acoustical baffling.

The activation (e.g., expansion and/or cure) of the activatable material may occur via a heat activated cure, a room temperature cure, an induction cure, a microwave cure, an ultra-violet activated cure, or a moisture cure. The activatable material may comprise a two-component cure system wherein cure occurs upon mixing of two components. A mold into which the activatable material is located may be heated. A heat gun may be utilized, a microwave source may be used, an induction coil or autoclave may be utilized for activation. Typically, the activatable material becomes reactive (cures, expands or both) at higher processing temperatures. Such temperatures may be in the range of about 50°C to 300°C.

During manufacture, the activatable material may be located into a system where the material conforms to the shape of a device for forming the composite structure. The device may be a press, a mold, a calendar or the like. Prior to forming the composite structure, the activatable material may be formed in its green state by die-cutting, extrusion, injection molding, calendaring, hand shaping, or by means of gravity.

The resulting composite structures may benefit from simplified formation of non-planar geometry. The flexible nature of the foam core material in its green state along with its expansion during activation allows for the shaping of curved/non-planar surfaces. At a sufficient press time and temperature, the activatable material will soften enough so that the only force required for the material to take on the desired shape is the force of the expansion of the material. The shaping step may include the formation of openings (e.g., holes), and integrated structures such as hooks, fasteners, or other attachments. The shaping step may also include forming labels, numbers, designs or the like onto surfaces of the composite structures. Such shaping preferably occurs simultaneously or near simultaneous with an activation step so that the resulting composite structure maintains its curved/non-planar shape. Substantially planar surfaces may also be shaped in accordance with teachings provided herein.

The activatable material may be a thermoset material, a silicone-based material, an epoxy based material, or a polyurethane-based material. The foam core material may be a sealant material. The foam core may preferably include an epoxy resin. Epoxy resin is used herein to mean any of the conventional dimeric, oligomeric or polymeric epoxy materials containing at least one epoxy functional group. The epoxy resin may be a bisphenol-A epoxy resin. The epoxy resin may comprise from about 2% to about 80% by weight of the foam core. The epoxy resin may comprise from about 10% to about 600% by weight of the foam core. The epoxy resin may comprise at least about 10% by weight of the foam core. The epoxy resin may comprise less than about 50% by weight of the foam core. The epoxy resin may be a liquid or a solid epoxy resin or may be a combination of liquid and solid epoxy resins.

The foam core may also include an epoxy/elastomer adduct. More specifically, the adduct is composed substantially entirely (i.e., at least 70%, 80%, 90% or more) of one or more adducts that are solid at a temperature of 23 °C. The adduct may comprise from about 5% to about 80% by weight of the foam core. The adduct may comprise at least about 5% by weight of the foam core. The adduct may comprise at least about 10% by weight of the foam core. The adduct may comprise less than about 70% by weight of the foam core. The adduct may comprise less than about 30% by weight of the foam core. The adduct itself generally includes about 1:5 to 5:1 parts of epoxy to elastomer, and more preferably about 1:3 to 3:1 parts or epoxy to elastomer. Exemplary elastomers include, without limitation, natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile (CTBN)), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. Examples of additional or alternative epoxy/elastomer or other adducts suitable for use in the present invention are disclosed in U.S. Patent Publication 2004/0204551. As a specific example, the foam core may include from about 5% to about 20% by weight CTBN/epoxy adduct.

The foam core may also include an impact modifier. The impact modifier may comprise at least about 4% by weight of the foam core. The impact modifier may comprise at least about 10% by weight of the foam core. The impact modifier may comprise at least about 17% by weight of the foam core. The impact modifier may comprise less than about 40% by weight of the foam core. The impact modifier may comprise from about 2% to about 60% by weight of the foam core.

The impact modifier may include at least one core/shell polymer. As used herein, the term core/shell polymer describes an impact modifier wherein a substantial portion (e.g., greater than 30%, 50%, 70% or more by weight) thereof is comprised of a first polymeric material (i.e., the first or core material) that is substantially entirely encapsulated by a second polymeric material (i.e., the second or shell material). The first and second polymeric materials, as used herein, can be comprised of one, two, three or more polymers that are combined and/or reacted together (e.g., sequentially polymerized) or may be part of separate or same core/shell systems. The first polymeric material, the second polymeric material or both of the core/shell impact modifier include or are substantially entirely composed of (e.g., at least 70%, 80%, 90% or more by weight) one or more thermoplastics. Exemplary thermoplastics include, without limitation, styrenics, acrylonitriles, acrylates, acetates, polyamides, polyethylenes or the like. It may be desirable for the glass transition temperature of the first or core polymeric material to be below 23 °C while the glass temperature of the second or shell polymeric material to be above 23 °C, although not required.

Examples of useful core-shell graft copolymers are those where hard containing compounds, such as styrene, acrylonitrile or methyl methacrylate, are grafted onto core made from polymers of soft or elastomeric containing compounds such as butadiene or butyl acrylate. U.S. Pat. No. 3,985,703, describes useful core-shell polymers, the cores of which are made from butyl acrylate but can be based on ethyl isobutyl, 2-ethylhexel or other alkyl acrylates or mixtures thereof. The core polymer, may also include other copolymerizable containing compounds, such as styrene, vinyl acetate, methyl methacrylate, butadiene, isoprene, or the like. The shell portion may be polymerized from methyl methacrylate and optionally other alkyl methacrylates, such as ethyl, butyl, or mixtures thereof methacrylates. Examples of core-shell graft copolymers include, but are not limited to, "MBS" (methacrylate-butadiene-styrene) polymers, which are made by polymerizing methyl methacrylate in the presence of polybutadiene or a polybutadiene copolymer rubber. The MBS graft copolymer resin generally has a styrene butadiene rubber core and a shell of acrylic polymer or copolymer. Examples of other useful core-shell graft copolymer resins include, ABS (acrylonitrile-butadiene-styrene), MABS (methacrylate-acrylonitrile-butadiene-styrene), ASA (acrylate-styrene-acrylonitrile), all acrylics, SA EPDM (styrene-acrylonitrile grafted onto elastomeric backbones of ethylene-propylene diene monomer), MAS (methacrylic-acrylic rubber styrene), and the like and mixtures thereof.

The foam core may also include one or more additional polymer and/or copolymer materials, such as thermoplastics, elastomers, plastomers, combinations thereof or the like. The foam core may include polyurethanes. Polymers that might be appropriately incorporated into the foam core include halogenated polymers, polycarbonates, polyketones, urethanes, polyesters, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) or mixtures thereof. Other potential polymeric materials may be or may include, without limitation, polyolefin (e.g., polyethylene, polypropylene) polystyrene, polyacrylate, poly(ethylene oxide), poly(ethyleneimine), polyester, polysiloxane, polyether, polyphosphazine, polyamide, polyimide, polyisobutylene, polyacrylonitrile, poly(vinyl chloride), poly(methyl methacrylate), poly(vinyl acetate), poly(vinylidene chloride), polytetrafluoroethylene, polyisoprene, polyacrylamide, polyacrylic acid, polymethacrylate.

As a specific example, the foam core may include at least about 2% but less than about 15% of a thermoplastic polyether. The foam core may include at least about 10% by weight polyvinyl chloride. The foam core may include less than about 30% by weight polyvinyl chloride. The foam core may include at least about 0.1% by weight and less than about 5% by weight polyethylene oxide. The foam core may include at least about 1% by weight of an ethylene copolymer (which may be and EVA or EMA copolymer). The foam core may include at least about 15% by weight of an ethylene copolymer. The foam core may include less than about 40% by weight of an ethylene copolymer. The foam core may include at least about 5% by weight acrylonitrile. The foam core may include at least about 20% by weight acrylonitrile. The foam core may include less than about 50% by weight acrylonitrile.

The foam core may also include a variety of blowing agents, curing agents and fillers. Examples of suitable blowing agents include chemical blowing agents (e.g., those agents that provide for material expansion via a chemical reaction) including but not limited to azodicarbonamide, dinitrosopentamethylenetetramine, 4,4-oxy-bis-(benzenesulphonylhydrazide), trihydrazinotriazine and N, Nᵢ-dimethyl-N,Nᵢ-dinitrosoterephthalamide. The blowing agent may also be a physical blowing agent, such that material expansion occurs via a phase change mechanism. An example of such a blowing agent in sold under the trade name Expancel, sold by Akzo Nobel, Sundsvall, Sweden. An accelerator for the blowing agents may also be provided in the activatable material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles. In addition, the material may include a flame retardant.

Examples of suitable curing agents include materials selected from aliphatic or aromatic amines or their respective adducts, amidoamines, polyamides, cycloaliphatic amines, anhydrides, polycarboxylic polyesters, isocyanates, phenol-based resins (e.g., phenol or cresol novolak resins, copolymers such as those of phenol terpene, polyvinyl phenol, or bisphenol-A formaldehyde copolymers, bishydroxyphenyl alkanes or the like), or mixtures thereof. Particular preferred curing agents include modified and unmodified polyamines or polyamides such as triethylenetetramine, diethylenetriamine tetraethylenepentamine, cyanoguanidine, dicyandiamides and the like. The curing agent may be a peroxide or sulfur curing agent. An accelerator for the curing agents (e.g., a modified or unmodified urea such as methylene diphenyl bis urea, an imidazole or a combination thereof) may also be provided for preparing the foam core.

Examples of suitable fillers include silica, diatomaceous earth, glass, clay (e.g., including nanoclay), talc, pigments, colorants, glass beads or bubbles, glass, carbon or ceramic fibers, nylon or polyamide fibers (e.g., Kevlar), antioxidants, and the like. Such fillers, particularly clays, can assist the activatable material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed. One or more mineral or stone type fillers such as calcium carbonate, sodium carbonate or the like may be used as fillers. In another preferred embodiment, silicate minerals such as mica may be used as fillers. Preferably the filler includes a material that is generally non-reactive with the other components present in the activatable material. While the fillers may generally be present within the activatable material to take up space at a relatively low weight, it is contemplated that the fillers may also impart properties such as strength and impact resistance to the activatable material.

Examples of materials that may be included as the foam core include those disclosed in U.S. Patent Nos. 7,892,396 and 7,125,461; and U.S. Application Nos. 2004/0204551; 2007/0090560; 2007/0101679; 2008/0060742; and 2009/0269547.

The face sheets may include any substantially solid material having the requisite capability to bond to the foam core. Polymeric materials may be used as the face sheets. The face sheets may include metal materials such as aluminum, steel, magnesium, tin, iron, nickel, copper, titanium or the like. The face sheets may be a combination of different metallic materials. The face sheets may also comprise one or more fiber materials including polyamide (e.g., nylon, aromatic polyamide and polyamideimide) fibers, aramid fibers, polyester fibers, glass fibers, silicon carbide fibers, alumina fibers, titanium fibers, steel fibers, carbon fibers and graphite fibers or the like.During use of the resulting composite structures, one or more fasteners or adhesives may be attached to the composite laminate for attachment to a secondary surface. The fasteners may be mechanical fasteners and may include but are not limited to push-pins, tree fasteners, hinges, screws, a mechanical interlock, integral locks, a male feature, a female feature or any combination thereof. The composite laminate may include one push pin on each opposing end of the composite laminate.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting polymeric blend composition" also contemplates a teaching of ranges of same recited amount of "x" in percent by weight of the resulting polymeric blend composition."

## Claims

1. A method for manufacturing foam core materials comprising:
locating into a mold a solid activatable material, the activatable material being amenable to plastic deformation and pliable enough to take on the general contours and shape of the mold prior to activation of the activatable material;
simultaneously activating and shaping the material into a foam core defined by the mold wherein the activatable material conforms to the shape of the mold due to the force of expansion of the activatable material during the activation and is free of any post-activation shaping process.

2. The method of claim 1, including bonding at least one face sheet to the foam core, wherein the bonding preferably occurs simultaneously with the activating and shaping step.

3. The method of any of claims 1 through 2, including locating an adhesive layer onto one or more of a first surface or opposing second surface of the foam core.

4. The method of any of claims 1 through 3, including forming a second foam core in direct or indirect planar contact with the foam core.

5. The method of claim 3 or claim 4, including bonding one face sheet in between the foam core and second foam core.

6. The method of any of claims 1 through 5, including bonding at least two face sheets to the foam core.

7. The method of any of claims 3 through 5, including bonding at least two face sheets to one or more of the foam core and second foam core.

8. The method of any of claims 2 through 7, including forming the at least one face sheet from a material selected from fibrous materials, metallic materials, polymeric materials, or combinations thereof.

9. The method of any of claims 2 through 8, including forming the at least one face sheet from a honeycomb material, a pre-preg material, or combinations thereof.

10. The method of any of claims 2 through 9, including forming the at least one face sheet from aluminum, steel, or combinations thereof.

11. The method of any of claims 1 through 10, wherein the activation step occurs by way of a heat cure, moisture cure, room temperature cure, induction cure, ultra-violet cure, or any combination thereof.

12. The method of any of claims 1 through 11, wherein the method results in formation of a foam core having a non-planar geometry.

13. The method of any of claims 1 through 12, wherein after activation the activatable material is not amenable to plastic deformation.

14. The method of any of claims 1 through 13, wherein prior to activation the activatable material is a flexible solid and after activation the activatable material is an inflexible solid.

15. The method according to one of the preceding claims 1 or 2, wherein the resulting composite structure has a non-planar geometry.

## Patentansprüche

1. Verfahren zur Herstellung von Schaumkernmaterialien, umfassend:
Anordnen eines festen aktivierbaren Materials in einem Formwerkzeug, wobei das aktivierbare Material für plastische Verformung empfänglich und nachgiebig genug ist, um die allgemeinen Konturen und die allgemeine Form des Formwerkzeugs vor der Aktivierung des aktivierbaren Materials anzunehmen;
gleichzeitiges Aktivieren und Formen des Materials zu einem Schaumkern, der durch das Formwerkzeug definiert wird, wobei das aktivierbare Material sich aufgrund der Dehnkraft des aktivierbaren Materials während der Aktivierung an die Form der Formwerkzeugs angleicht und frei von jeglichem Formgebungsprozess nach der Aktivierung ist.

2. Verfahren nach Anspruch 1, umfassend ein Bonden mindestens einer Deckschicht an den Schaumkern, wobei das Bonden vorzugsweise gleichzeitig mit dem Aktivierungs-und Formgebungsschritt erfolgt.

3. Verfahren nach einem der Ansprüche 1 bis 2, umfassend ein Anordnen einer Klebschicht auf einer oder mehreren einer ersten Oberfläche oder einer gegenüberliegenden zweiten Oberfläche des Schaumkerns.

4. Verfahren nach einem der Ansprüche 1 bis 3, umfassend ein Bilden eines zweiten Schaumkerns in direktem oder indirektem Flächenkontakt mit dem Schaumkern.

5. Verfahren nach Anspruch 3 oder 4, umfassend ein Bonden einer Deckschicht zwischen den Schaumkern und den zweiten Schaumkern.

6. Verfahren nach einem der Ansprüche 1 bis 5, umfassend ein Bonden mindestens zweier Deckschichten an den Schaumkern.

7. Verfahren nach einem der Ansprüche 3 bis 5, umfassend ein Bonden mindestens zweier Deckschichten an einen oder mehrere des Schaumkerns und des zweiten Schaumkerns.

8. Verfahren nach einem der Ansprüche 2 bis 7, umfassend ein Bilden mindestens einer Deckschicht aus einem Material, das aus faserigen Materialien, metallischen Materialien, polymeren Materialien oder Kombinationen davon ausgewählt wird.

9. Verfahren nach einem der Ansprüche 2 bis 8, umfassend ein Bilden der mindestens einen Deckschicht aus einem Wabenmaterial, einem Prepeg-Material oder Kombinationen davon.

10. Verfahren nach einem der Ansprüche 2 bis 9, umfassend ein Bilden der mindestens einen Deckschicht aus Aluminium, Stahl oder Kombinationen davon.

11. Verfahren nach einem der Ansprüche 1 bis 10, wobei der Aktivierungsschritt durch eine Wärmehärtung, eine Feuchtigkeitshärtung, eine Raumtemperaturhärtung, eine Induktionshärtung, eine UV-Härtung oder eine beliebige Kombination davon erfolgt.

12. Verfahren nach einem der Ansprüche 1 bis 11, wobei das Verfahren zur Bildung eines Schaumkerns mit einer nicht planaren Geometrie führt.

13. Verfahren nach einem der Ansprüche 1 bis 12, wobei das aktivierbare Material nach der Aktivierung nicht für plastische Verformung empfänglich ist.

14. Verfahren nach einem der Ansprüche 1 bis 13, wobei das aktivierbare Material vor der Aktivierung ein flexibler Feststoff ist, und das aktivierbare Material nach der Aktivierung ein unflexibler Feststoff ist.

15. Verfahren nach einem der Ansprüche 1 oder 2, wobei die resultierende Verbundstoffstruktur eine nicht planare Geometrie aufweist.

## Revendications

1. Procédé de fabrication de matériaux à cœur de mousse comprenant :
la mise en place dans un moule d'un matériau solide pouvant être activé, le matériau pouvant être activé se prêtant à une déformation plastique et étant suffisamment pliable pour prendre les contours généraux et la forme du moule avant l'activation du matériau pouvant être activé ;
l'activation et le façonnage simultanés du matériau en un cœur de mousse défini par le moule, le matériau pouvant être activé se conformant à la forme du moule en raison de la force d'expansion du matériau pouvant être activé pendant l'activation et étant exempt de tout processus de façonnage après activation.

2. Procédé selon la revendication 1, comprenant le collage d'au moins une feuille de surface sur le cœur de mousse, le collage ayant lieu de préférence simultanément avec l'étape d'activation et de façonnage.

3. Procédé selon l'une quelconque des revendications 1 et 2, comprenant la mise en place d'une couche adhésive sur une première surface et/ou une seconde surface opposée du cœur de mousse.

4. Procédé selon l'une quelconque des revendications 1 à 3, comprenant la formation d'un second cœur de mousse en contact plan direct ou indirect avec le cœur de mousse.

5. Procédé selon la revendication 3 ou la revendication 4, comprenant le collage d'une feuille de surface entre le cœur de mousse et le second cœur de mousse.

6. Procédé selon l'une quelconque des revendications 1 à 5, comprenant le collage d'au moins deux feuilles de surface sur le cœur de mousse.

7. Procédé selon l'une quelconque des revendications 3 à 5, comprenant le collage d'au moins deux feuilles de surface sur le cœur de mousse et/ou le second cœur de mousse.

8. Procédé selon l'une quelconque des revendications 2 à 7, comprenant la formation de l'au moins une feuille de surface à partir d'un matériau choisi parmi des matériaux fibreux, des matériaux métalliques, des matériaux polymères ou des combinaisons de ceux-ci.

9. Procédé selon l'une quelconque des revendications 2 à 8, comprenant la formation de l'au moins une feuille de surface à partir d'un matériau alvéolaire, d'un matériau pré-imprégné ou d'une combinaison de ceux-ci.

10. Procédé selon l'une quelconque des revendications 2 à 9, comprenant la formation de l'au moins une feuille de surface à partir d'aluminium, d'acier ou d'une combinaison de ceux-ci.

11. Procédé selon l'une quelconque des revendications 1 à 10, l'étape d'activation étant réalisée par un durcissement à la chaleur, un durcissement à l'humidité, un durcissement à température ambiante, un durcissement par induction, un durcissement aux ultra-violets, ou n'importe quelle combinaison de ceux-ci.

12. Procédé selon l'une quelconque des revendications 1 à 11, le procédé résultant en la formation d'un cœur de mousse ayant une géométrie non plane.

13. Procédé selon l'une quelconque des revendications 1 à 12, après activation, le matériau pouvant être activé ne se prêtant pas à une déformation plastique.

14. Procédé selon l'une quelconque des revendications 1 à 13, avant l'activation, le matériau pouvant être activé étant un solide souple et, après l'activation, le matériau pouvant être activé étant un solide rigide.

15. Procédé selon l'une des revendications 1 ou 2 précédentes, la structure composite résultante ayant une géométrie non plane.
